# EUROPEAN PATENT APPLICATION

(11) **EP 2 210 862 A1**
(43) Date of publication of application: **28.07.2010**
(21) Application number: 08700585.6
(22) Date of filing: 03.01.2008
(51) Int. Cl.: C02F 1/00, C02F 1/44, C02F 103/08, B05B 1/00

(54) **A SEAWATER DESALINATION SYSTEM USING CAVITATING JET TECHNIQUE**

(30) Priority: 13.11.2007 CN 200710177266
(71) Applicant: Xu, Xiaohua, Beijing 100098 (CN)
(72) Inventor: LV, Zhigang, Beijing 100098 (CN); JI, Ming, Beijing 100098 (CN)
(74) Representative: Schüssler, Andrea
(86) International application number: PCT/CN2008/000025
(87) International publication number: WO 2009/062364

(57) **Abstract**

The present invention relates to a sea-water desalinating system adopting jetting cavitational technology, which includes a sea water collecting device, a water transmitting pump, a coarse filtering device, a fine filtering device, a booster pump, a jetting cavitational device, a sea water desalination device and a fresh water storing device, wherein the sea water desalination device is a reverse osmosis membrane filtering device or a distilling device, and the jetting cavitational device is cascaded in parallel or in series. The advantage of the present invention is simple in structure, low investment, low cost, stable in performance. Comparing to the present sea water desalination system, the present invention does not need to add chemical agent to the sea water in the preliminary process. Further more, the present invention is capable of being configured at front of the conventional sea water desalination equipment.

## Description

### Background of the Present Invention

### Field of Invention

The present invention relates to a sea-water desalinating system, and more particularly to a sea-water desalinating system adopting jetting cavitational technology, belonging to C02F1/00 according to the international classification of patent.

### Description of Related Arts

At present, there are a lot of methods in domestic and overseas to desalinate sea water, such as Rheological Phase, Evaporation, Distillation, Cooling, Membrane Separation, Counter-infiltration, Electrodialysis, Chemistry Equilibrium, Lon Exchange, Hydration, Solvent Extraction, and so on. The Flash Distillation and the Reverse Osmosis Membrane are widely used currently. The desalinated sea-water utilizing the above two methods is about 90% of the gross production. The drawbacks of the present methods are: large investment, high power consumption, low production rate, high cost, medical additive requirement, and low quality.

### Summary of the Present Invention

A main object of the present invention is to provide a sea-water desalinating system adopting jetting cavitational technology.

Accordingly, in order to accomplish the above object, the present invention provides a sea water collecting device, a water transmitting pump, a coarse filtering device, a fine filtering device, a booster pump, a jetting cavitational device, a sea water desalination device, and a fresh water storing device connected in turn. wherein said sea water collecting device is a reverse osmosis membrane filtering device or a distilling device.

The jetting cavitational devices are cascaded in series or in parallel, so as to improve the precision and the efficiency of the water processing.

The pressure of booster pump is 0.2 Mpa to 80 Mpa, and the power of the booster pump 5 is 2KW to 500KW.

The jetting cavitational device comprises an inner core cavity sealed and fastened in an outer sealed casing, and a shape of said inner core cavity is round, column, ellipse, cubic or other shape. A annular cavity is formed between the outer sealed casing and the inner core cavity, wherein the outer sealed casing has an inlet, and the inlet is communicated with the annular cavity, wherein the core cavity has a inner cavitational cavity therein, and at least one outlet provided at a connecting position of the inner cavitational cavity and the outer sealed casing, wherein the outlet is communicated with the inner cavitational cavity, wherein the core cavity has a plurality of ejector nozzles, and the annular cavity is communicated with the inner cavitational cavity via the ejector nozzles. The size, number, shape, and position of the ejector nozzle are arbitrary. A ratio of a cross sectional area of said ejector nozzle to a cross sectional area of said inlet of said outer sealed casing is 1 to 100 : 500, and to a cross sectional area of said outlet path is 1 to 100 : 1000.

When the sea water desalinating system with jetting cavitational technology of the present invention is operating, the sea water to be desalination is collected by the sea water collecting device, and transmitted to the coarse filtering device by the water transmitting pump to be pre-filtered for eliminating various kinds of impurities. Then the sea water enters into the fine filtering device for being further filtered, and is transmitted to the jetting cavitational device by the booster pump. The sea water processed become sea water of a cluster of small molecules, and get sterilized and flocculated at the same time. Then the sea water is transmitted directly to the conventional desalinating device, and the fresh water after processing is transmitted to the fresh water storing device.

The advantages are illustrated as follows:
(1) The fresh water that is got from the sea water processed via jetting caviational technology contains many kinds of trace elements and minerals, which is benefit to the human body, and has each performance higher than the standard for drinking water quality in china; while the fresh water that is got from conventional processing means contains a lot of chemical additives added in the preliminary processing and the output stage, which is bad in quality, and does not suitable for drinking.
(2) The present invention is simple in structure, less equipment investment, low cost, stable in performance. Comparing to the present sea water desalinating system, the present invention reduces or eliminates the medical additive step in the preliminary processing for sterilizing, flocculating, and preventing scale. The microorganisms in the sea water are sterilized in the acoustic field and flocculated forming a cluster of small molecules in the jetting caviational processing, so that the fresh water can be easier for humane body to absorb. Using the cluster of small molecules to make fresh water can prolongs the life span of the reverse osmosis membrane, prevents the scale of the distilling equipment, and prolong the preservation period of the fresh water.
(3) The equipment of the present invention can support other equipment. It can be configured at a front end of the conventional sea water desalinating equipment, and can optimize, upgrade, and reform the conventional sea water desalinating system.

### Brief Description of the Drawings

Fig. 1 is a schematic view of a sea water desalination system with jetting cavitational technology according to a preferred embodiment of the present invention.
Fig. 2 is a schematic view of an alternative mode of the sea water desalination system with jetting cavitational technology according to the above preferred embodiment of the present invention.
Fig. 3 is a schematic view of a second alternative mode of the sea water desalination system with jetting cavitational technology according to the above preferred embodiment of the present invention.
Fig. 4 is a schematic view of a third alternative mode of the sea water desalination system with jetting cavitational technology according to the above preferred embodiment of the present invention.

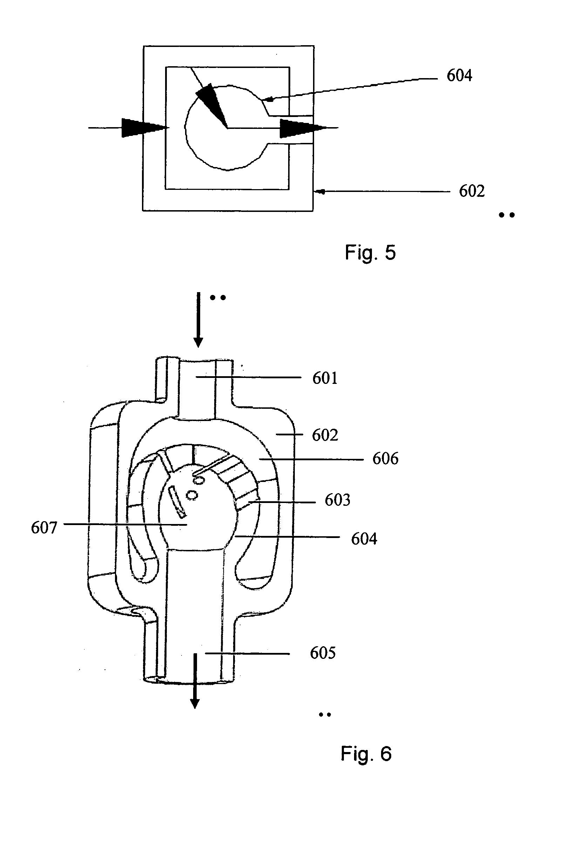

Fig. 5 is a schematic view of a jetting cavitational device of the sea water desalination system with jetting cavitational technology according to the above preferred embodiment of the present invention.
Fig. 6 is a sectional view of a jetting cavitational device of the sea water desalination system with jetting cavitational technology according to the above preferred embodiment of the present invention.

### Detailed Description of the Preferred Embodiment

Further description of the present invention is provided below according to the drawings and the preferred embodiment, which will not limit the scope of the present invention.

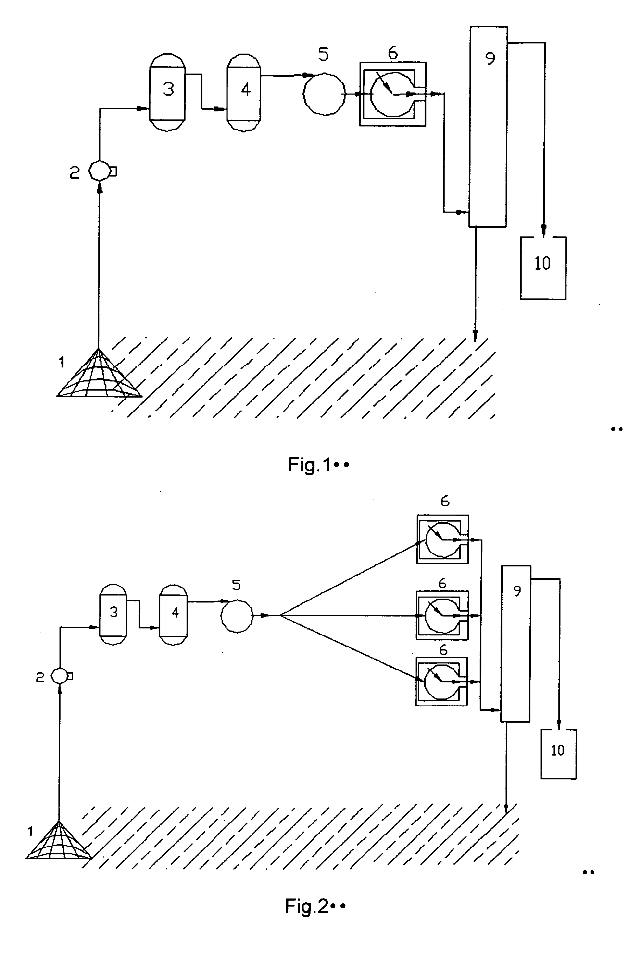

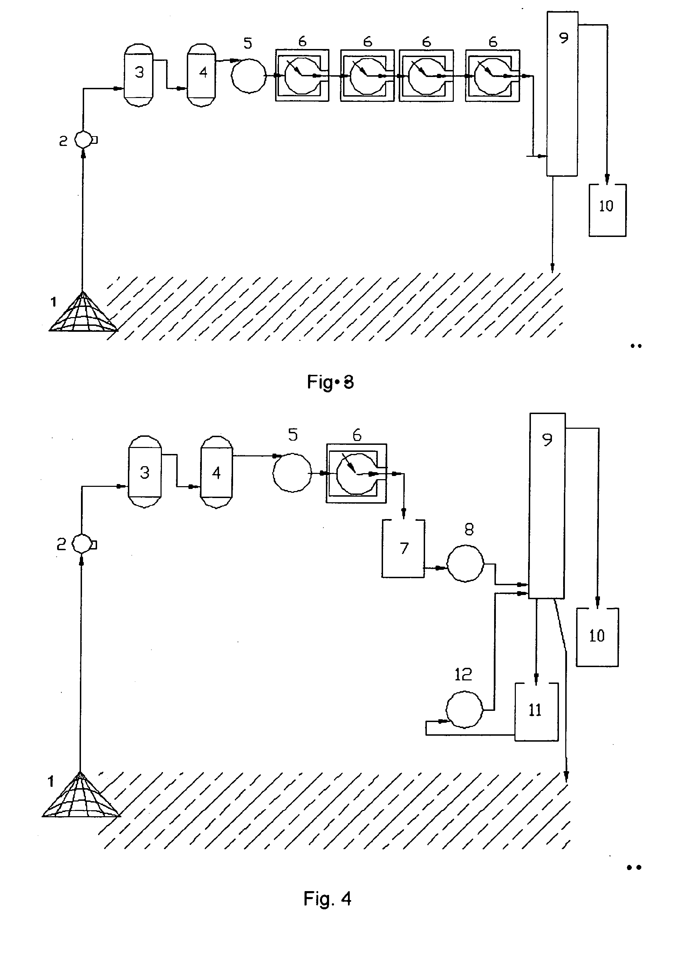

Referring to Fig.1 of the drawings, the sea water to be desalination is collected by the sea water collecting device 1, and transmitted to the coarse filtering device 3 by the water transmitting pump 2 to be pre-filtered for eliminating various kinds of impurities. Then the sea water enters into the fine filtering device 4 for being further filtered, and is transmitted to the jetting cavitational device 6 by the booster pump 5. The jetting cavitational device 6 sterilizes and flocculates the sea water, and gets purified sea water. Then the purified sea water is transmitted into the sea water desalination device 9 to be desalinated and becomes fresh water. The fresh water is stored in a fresh water storing device 10. As shown in Fig. 2 and Fig. 3, the jetting cavitational device 6 can be cascaded in series or in parallel to improve the quality of the water processing system or the efficiency of water processing system.

Referring to Fig. 4 of the drawings, the sea water to be desalination is collected by the sea water collecting device 1, and transmitted to the coarse filtering device 3 by the water transmitting pump 2 to be pre-filtered for eliminating various kinds of impurities. Then the sea water enters into the fine filtering device 4 for being further filtered, and is transmitted to the jetting cavitational device 6 by the booster pump 5. The jetting cavitational device 6 sterilizes and flocculates the sea water, and gets purified sea water. The purified sea water is stored into a sea water storing device 7, and is transmitted to a sea water desalination device 9 by a second water transmitting pump 8 to be desalinated and becomes fresh water. The fresh water is stored in a fresh water storing device 10. When the sea water desalination device 9 adopts a reverse osmosis membrane filtering device, the sea water desalination system may further comprises a circulating subsystem comprising a concentrated water storing device 11 and a third water transmitting pump 12, so as to repeatedly utilizing the reverse osmosis membrane filtering device.

The pressure of booster pump 5 is 0.2 Mpa to 80 Mpa, and the power of the booster pump 5 is 2KW to 500KW.

The jetting cavitational device 6 comprises an outer sealed casing 602 having an inlet 601, an inner casing 604 that can be of any shape, such as circular, column, elliptical, cubic, and so on, having a inner cavitational cavity 607 provided therein, wherein the outer sealed casing and the inner casing forms a annular cavity 606 therebetween, which communicates with the inlet 601 of the outer sealed casing. The inner casing 604 is connected with the outer sealed casing forming an outlet path 605 for communicating the inner cavitational cavity 607 and the outside of the outer sealed casing 602. In addition, the inner casing 604 has a plurality of ejector nozzles 603 thereon for communicating the inner cavitational cavity 607 and the annular cavity 606 between the outer sealed casing 602 and the inner casing 604. The ejector nozzle 603 can be of any size, number, shape, location according to the requirement of the material to be processed. The ratio of the cross sectional area of the ejector nozzle 603 to the cross sectional area of the inlet of the outer sealed casing 602 is 1 to 100 : 500, and to the cross sectional area of the outlet path 605 is 1 to 100 : 1000.

The cavitational mentioned in the present invention is a physical phenomenon. Cavitational means that cavities or bubbles are forming in the liquid that we're pumping. These cavities form at the low pressure or suction side of the pump. The cavities or bubbles will collapse when they pass into the higher regions of pressure, causing shock wave, large pressure in every tiny area.

The jetting cavitational technology utilized in the present invention is a liquid acoustic energy technology, which can produce cavitational vibration via acoustic wave transmitting in a liquid. Therefore, if the area and range of cavitational vibration is effectively controlled, the material to be processed will be made a chemical or physical reaction.

## Claims

1. A sea water desalinating system with jetting cavitational technology, comprising a sea water collecting device, a water transmitting pump, a coarse filtering device, a fine filtering device, a booster pump, a jetting cavitational device, a sea water desalination device, and a fresh water storing device connected in turn.

2. The sea water desalinating system with jetting cavitational technology, as recited in claim 1, wherein said sea water collecting device is a reverse osmosis membrane filtering device or a distilling device.

3. The sea water desalinating system with jetting cavitational technology, as recited in claim 1, wherein the jetting cavitational devices are cascaded in series.

4. The sea water desalinating system with jetting cavitational technology, as recited in claim 1, wherein the jetting cavitational devices are cascaded in parallel.

5. The sea water desalinating system with jetting cavitational technology, as recited in claim 1, further comprising a sea water storing device and a second water transmitting pump connected in turn between the between said jetting cavitational device and said sea water desalination device.

6. The sea water desalinating system with jetting cavitational technology, as recited in claim 1, wherein said booster pump has a pressure from 0.2Mpa to 80Mpa, and has a power from 2KW to 500KW.

7. The sea water desalinating system with jetting cavitational technology, as recited in claim 2, wherein when said sea water desalination device is a reverse osmosis membrane filtering device, said sea water desalination device further comprises a circulating subsystem, comprising a concentrated water storing device and a third water transmitting pump.

8. The sea water desalinating system with jetting cavitational technology, as recited in claim 1, wherein said jetting cavitational device comprises a inner core cavity sealed and fastened in an outer sealed casing, wherein a annular cavity is formed between said outer sealed casing and said inner core cavity, wherein said outer sealed casing has an inlet, and said inlet is communicated with said annular cavity, wherein said core cavity has a inner cavitational cavity therein, and at least one outlet provided at a connecting position of said inner cavitational cavity and said outer sealed casing, wherein said outlet is communicated with said inner cavitational cavity, wherein said core cavity has a plurality of ejector nozzles, and said annular cavity is communicated with said inner cavitational cavity via said ejector nozzles.

9. The sea water desalinating system with jetting cavitational technology, as recited in claim 8, wherein said a ratio of a cross sectional area of said ejector nozzle to a cross sectional area of said inlet of said outer sealed casing is 1 to 100 : 500, and to a cross sectional area of said outlet path is 1 to 100 : 1000.

10. The sea water desalinating system with jetting cavitational technology, as recited in claim 8, wherein a shape of said inner core cavity is round, column, ellipse, or cubic.
